# EUROPÄISCHE PATENTSCHRIFT

(11) **EP 1 088 700 B1**
(45) Veröffentlichungstag und Bekanntmachung des Hinweises auf die Patenterteilung: **14.11.2007**
(21) Anmeldenummer: 00119229.3
(22) Anmeldetag: 06.09.2000
(51) Int. Cl.: B60Q 1/115

(54) **System zur Leuchtweitenregelung der Scheinwerfer bei Kraftfahrzeugen**
Headlight beam control for a vehicle
Réglage de la portée des phares d'un véhicule

(30) Priorität: 01.10.1999 DE 19947408
(43) Veröffentlichungstag der Anmeldung: 04.04.2001
(73) Patentinhaber: Bayerische Motoren Werke Aktiengesellschaft, 80809 München (DE)
(72) Erfinder: Bilz, Frank, 80634 München (DE); Lehnert, Peter, 80634 München (DE)

(56) Entgegenhaltungen:
- EP-A- 0 899 156
- DE-A- 19 653 662
- DE-A- 19 722 717
- FR-A- 2 738 193
- PATENT ABSTRACTS OF JAPAN vol. 1998, no. 12, 31. Oktober 1998 (1998-10-31) & JP 10 181426 A (ICHIKOH IND LTD), 7. Juli 1998 (1998-07-07)

## Beschreibung

Die Erfindung bezieht sich auf ein System zur Leuchtweitenregelung der Scheinwerfer bei Kraftfahrzeugen nach dem Oberbegriff des Patentanspruchs 1.

Ein derartiges Leuchtweitenregelungssystem ist beispielsweise im ATZ-Artikel "Dynamische Leuchtweitenregelung", 9/1993, S. 466 ff., beschrieben. Bei dieser dynamischen Leuchtweitenregelung wird die Einfederung der Karosserie, die sich als Karosserie-Längsneigung bzw. als Karosserie-Nickwinkel auswirkt, mit zwei in Längsrichtung versetzten Höhensensoren in Form von Ultraschallsensoren ermittelt. Der Karosserie-Nickwinkel liegt nach der Messung in Form einer Höhendifferenz vor. Dabei messen die Höhensensoren die Höhen bzw. Abstände zwischen der Karosserie und der Fahrbahn vorne und hinten am Karosserieboden. Auch werden Höhensensoren in Form von Achssensoren verwendet, die jeweils die Höhe bzw. den Abstand zwischen der Karosserie und den Fahrzeugachsen (Hinterachse und Vorderachse) messen. In einem elektronischen Steuergerät mit Mikrocomputer wird der Sollwert zur Scheinwerfereinstellung, z. B. die einzustellende Position eines Schrittmotors, in Abhängigkeit von der gemessenen Höhendifferenz berechnet. Dabei wird die Höhendifferenz gemittelt, wobei der Mittelungs-Zeitraum von der Fahrzeuggeschwindigkeit abhängt.

Mit dem bekannten dynamischen Leuchtweitenregelungssystem wird zwischen einem langsamen (statischen) und einem schnellen (dynamischen) Regelmodus unterschieden. Im langsamen Regelmodus werden die vergleichsweise lange anhaltenden bzw. statischen Nickwinkel bzw. Längsneigungen berücksichtigt, die insbesondere durch die Beladung des Fahrzeuges, die Tankentleerung und/oder die Veränderung des Luftwiderstandes erzeugt werden. Im schnellen Regelmodus werden die Änderungen des Nickwinkels durch fahrdynamische Einflüsse, wie insbesondere bei Beschleunigungs- oder Verzögerungsvorgängen, berücksichtigt.

Um die Schrittmotoren in den Scheinwerfern nicht zu lange zu belasten, wird der schnelle Regelmodus nur eingeschaltet, wenn eine starke Nickwinkeländerung durch fahrdynamische Einflüsse zu erwarten ist. Hierzu wird die erste Ableitung des Fahrzeuggeschwindigkeitssignals und/oder das Bremslichtsignal ausgewertet. Diese Signale sind im Hinblick auf tatsächliche Nickwinkeländerungen nur bedingt aussagekräftig. Darüber hinaus findet eine Regelung abhängig von diesen Signalen nur verzögert statt. Aus FR 2 738 193 ist ein gattungsmäßes System zur Leuchtweitenregelung der Scheinwerfer bekannt.

Es ist Aufgabe der Erfindung, ein System zur Leuchtweitenregelung eingangs genannter Art derart zu verbessern, daß unter Umgehung der Nachteile des Standes der Technik unter dynamischen Fahrbedingungen eine optimale Beleuchtung der Fahrbahn ebenso wie eine Minimierung der Blendung des Gegenverkehrs stattfindet.

Diese Aufgabe wird durch die Merkmale des Patentanspruchs 1 gelöst.
Vorteilhafte Weiterbildungen der Erfindung sind die Gegenstände der abhängigen Patentansprüche.

Das erfindungsgemäße System zur Leuchtweitenregelung der Scheinwerfer bei Kraftfahrzeugen weist zwei in Längsrichtung versetzte Höhensensoren zur Messung des Karosserie-Nickwinkels in Form einer Höhendifferenz und ein elektronisches Steuergerät zur Bestimmung des Sollwertes zur Scheinwerfereinstellung in Abhängigkeit von der gemessenen Höhendifferenz auf. Das Steuergerät ist derart ausgestaltet, daß der Sollwert abhängig von der ersten Ableitung der direkt gemessenen Höhendifferenz oder abhängig von der ersten Ableitung einer weiterverarbeiteten Höhendifferenz bestimmt wird. Unter dem Begriff direkt gemessene Höhendifferenz wird insbesondere die Differenz der von den Höhensensoren gemessenen und an das Steuergerät in Form von Meßsignalen gelieferten Höhenwerten verstanden. Unter dem Begriff weiterverarbeitete Höhendifferenz wird insbesondere die Differenz der gemessenen und im Steuergerät weiterverarbeiteten Höhenwerte und/oder die weiterverarbeitete Differenz der gemessenen oder weiterverarbeiteten Höhenwerte verstanden. Eine Weiterverarbeitung kann beispielsweise eine Mittelung oder andere Filterung sein. Auch kann eine Weiterverarbeitung eine anderweitige Bereinigung von Störeinflüssen sein.

Durch die Auswertung der ersten Ableitung der Höhendifferenz wird festgestellt, ob und in welchem Ausmaß tatsächlich eine Änderung des Nickwinkels vorliegt. Hierdurch ist eine direktere Nickwinkel-Regelung möglich. Abhängig vom Ausmaß der ersten Ableitung kann beispielsweise entschieden werden, ob ein langsamer oder ein schneller Regelmodus gewählt werden soll.

In einer ersten Alternative einer vorteilhaften Weiterbildung der Erfindung wird abhängig vom Ergebnis der ersten Ableitung der gemessenen Höhendifferenz der Zeitraum für eine Mittelung der gemessenen Höhendifferenz vorgegeben.

In einer zweiten Alternative einer vorteilhaften Weiterbildung der Erfindung werden ein statischer Höhendifferenzwert zumindest durch Mittelung der direkt gemessenen Höhendifferenz über einen ersten vorgegebenen Zeitraum sowie ein dynamischer Höhendifferenzwert zumindest durch Mittelung der direkt gemessenen Höhendifferenz über einen zweiten vorgegebenen Zeitraum gebildet. Dabei wird der erste Zeitraum wesentlich länger als der zweite Zeitraum vorgegeben. Der Sollwert wird abhängig von der ersten Ableitung des dynamischen Höhendifferenzwertes als weiterverarbeitete Höhendifferenz bestimmt. Hierdurch kann gleichzeitig eine Regelung der Nickwinkelabweichung aufgrund statischer und aufgrund dynamischer Einflüsse vorgenommen werden. Die Nickwinkeländerungen aufgrund statischer und aufgrund dynamischer Einflüsse werden hierbei getrennt betrachtet. Ebenso kann deren gegenseitige Beeinflussung berücksichtigt werden.

Vorzugsweise wird der Sollwert auch abhängig von der zweiten Ableitung des dynamischen Höhendifferenzwertes bestimmt. Durch Hinzunahme fahrzeugrelevanter Größen (z.B. Schwerpunktslage, Trägheitsmomente, Federkonstanten,etc.) ist eine Regelung abhängig von einer vorhersagbaren Nickbewegung möglich. Hierdurch kann die Regelung weiter beschleunigt und verbessert werden.

Der Sollwert wird in einer weiteren vorteilhaften Ausgestaltung der Erfindung auch abhängig von weiteren dem Steuergerät übermittelten Informationen, die vorzugsweise ohnehin durch andere Systeme im Fahrzeug vorliegen, bestimmt. Derartige Informationen können beispielsweise die Straßeninformationen von einem Navigationssystem, der Abstand zu einem vorausfahrenden Fahrzeug von einem Abstandsregelsystem, die Gaspedalstellung, der Bremsdruck, die Fahrzeuggeschwindigkeit und/oder die Sichtweite eines Nebelsensors sein. Hierdurch kann eine sehr gut situationsangepaßte intelligente Steuerung der Scheinwerferneigung vorgenommen werden.

Beispielsweise können GPS-Daten in Verbindung mit einem Navigationssystem im Kraftfahrzeug über die Straßenklasse (z. B. Autobahn oder Stadtstraße) herangezogen werden. Damit kann das Steuergerät grundsätzlich für Autobahnen eine vergleichsweise stärker angehobene Scheinwerfereinstellung als bei Stadtstraßen vornehmen. Kuppen und Wannen können mit der Höhenverlaufsinformation der GPS-Daten und des Navigationssystems optimaler ausgeleuchtet werden.

Weiterhin kann der momentane Abstand zu einem vorausfahrenden oder einem entgegenkommenden Fahrzeug, der beispielsweise von einem ACC-System (Adaptive Cruise Control) im Kraftfahrzeug an das Steuergerät übermittelt werden kann, berücksichtigt werden. Hierbei kann grundsätzlich ein Absenken der Scheinwerfer zur Blendungsbegrenzung vorgenommen werden.

Die Stellung des Gaspedals oder der Drosselklappe kann berücksichtigt werden, um beispielsweise ein präventives Absenken der Scheinwerfer bei einem erwarteten Aufbäumen das Fahrzeuges durch einen Beschleunigungsvorgang vorzunehmen.

Ebenso kann der Bremsdruck oder die Wechselgeschwindigkeit vom Gasauf das Bremspedal ausgewertet werden, um beispielsweise bei einer Notbremsung ein präventives Anheben der Scheinwerfer zur Sichtverbesserung vorzunehmen.

Schließlich kann auch das Signal eines Sichtweiten- oder Nebelsensors ausgewertet werden, um beispielsweise bei starkem Nebel die Scheinwerfer zur Minimierung der Streuleuchtdichte präventiv abzusenken.

Durch die Erfindung findet eine direktere, genauere und schnellere Regelung der Scheinwerferneigung als beim Stand der Technik statt.

In der Zeichnung ist ein Ausführungsbeispiel der Erfindung dargestellt. Es zeigen
- Fig. 1: schematisch ein erstes sehr einfaches erfindungsgemäßes Leuchtweitenregelungssystem und
- Fig. 2: schematisch ein zweites sehr genau arbeitendes erfindungsgemäßes Leuchtweitenregelungssystem.

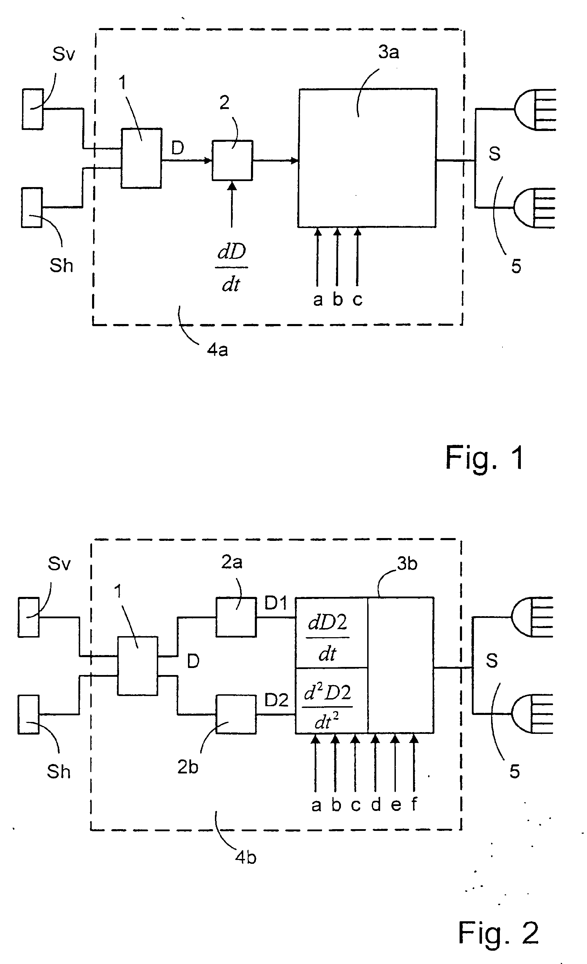

In Fig. 1 sind zwei in Längsrichtung versetzte Höhensensoren an einem hier nicht dargestellten Fahrzeug, ein vorderer Sensor Sv und ein hinterer Sensor Sh dargestellt. Die Sensoren Sv und Sh sind z. B. Ultraschallsensoren vorne und hinten am Karosserieboden oder Achssensoren an der Vorder- und an der Hinterachse, wie aus dem Stand der Technik bekannt. Zur Messung des Karosserie-Nickwinkels in Form einer Höhendifferenz D sind die Ausgangssignale der Sensoren Sv und Sh mit einem Höhendifferenzermittler 1 eines elektronischen Steuergeräts 4a verbunden. Der Höhendifferenzermittler 1 ist mit einem Filter 2 verbunden, Im Steuergerät 4a wird die erste Ableitung dD/dt der direkt gemessenen Höhendifferenz D gebildet. Der Filter 2 ist beispielsweise ein Tiefpaß, dessen Zeitkonstante abhängig von der ersten Ableitung dD/dt der Höhendifferenz einstellbar ist. Über das Filter 2 wird die Höhendifferenz gemittelt. Der gemittelte Wert der Höhendifferenz wird vom Filter an einen Sollwertermittler 3a des Steuergerätes 4a weitergeleitet. Der Sollwert S zur Verstellung der hier nur schematisch dargestellten Scheinwerferanordnung 5 wird im Sollwertermittler 3a in Abhängigkeit von dem gemittelten Wert der Höhendifferenz und ggf. von weiteren Signale a,b, und c berechnet. Die Signale a, b und c sind beispielsweise das Fahrzeuggeschwindigkeitssignal, das Bremslichtsignal und das Gaspedalstellungssignal.

Grundsätzlich wird im Steuergerät 4a geprüft, ob die erste Ableitung der Höhendifferenz, dD/dt, oberhalb einer vorgegebenen Schwelle liegt. Ist dies der Fall, hat sich der Nickwinkel derart geändert, daß ein Nachführen der Scheinwerfer erforderlich sein kann. Abhängig von dem Wert der ersten Ableitung oder von der Häufigkeit der Änderung des Wertes der ersten Ableitung dD/dt kann durch Bestimmung der Zeitkonstante des Filters 2 eine langsame oder schnelle Regelung eingeleitet werden. In dem in Fig. 1 dargestellten einfachen Steuergerät 4a kann also die Umschaltfunktion des aus dem Stand der Technik bekannten Geschwindigkeitssignals vom Wert der ersten Ableitung der Höhendifferenz dD/dt übernommen werden. Hierbei findet im Unterschied zum Stand der Technik nicht die Regelung einer vermuteten, sondern der tatsächlichen Nickwinkeländerung statt.

Durch die Berücksichtigung der weiteren Signale kann die Regelung situativ noch besser angepaßt werden. Beispielsweise kann das Absenken der Scheinwerfer (Höhe des Sollwertes S) grundsätzlich bei hoher Geschwindigkeit reduziert werden, da hierbei keine großen Kräfte, die das Fahrzeug auslenken, am Fahrwerk wirken können. Das Bremslichtsignal und die Gaspedalstellung weisen auf einen bevorstehenden Verzögerungs- oder Beschleunigungsvorgang hin.

In Fig. 2 sind wie in Fig. 1 die zwei in Längsrichtung versetzten Höhensensoren Sv und Sh zur Messung des Karosserie-Nickwinkels in Form einer Höhendifferenz D mit einem Höhendifferenzermittler 1 verbunden. Der Höhendifferenzermittler 1 ist in einem Steuergerät 4b angeordnet. Die im Höhendifferenzermittler 1 gebildete Höhendifferenz D wird zum einen zu einem Filter 2a und zum anderen zu einem Filter 2b im Steuergerät 4b geleitet. Der Filter 2a ist ein Tiefpaßfilter mit großer Zeitkonstante, der Filter 2b ist ein Tiefpaßfilter mit kleiner Zeitkonstante. Mittels der Filter 2a und 2b werden ein statischer Höhendifferenzwert D1 durch Mittelung der direkt gemessenen Höhendifferenz D über einen ersten vorgegebenen Zeitraum sowie ein dynamischer Höhendifferenzwert D2 durch Mittelung der direkt gemessenen Höhendifferenz D über einen zweiten vorgegebenen Zeitraum gebildet. Durch die Wahl der Zeitkonstanten ist der erste Zeitraum wesentlich länger als der zweite Zeitraum. Die Höhendifferenzwerte D1 und D2 sind damit weiterverarbeitete Höhendifferenzwerte. Der Sollwert S wird vom Sollwertermittler 3b zumindest abhängig von der ersten Ableitung des dynamischen Höhendifferenzwertes, dD2/dt, bestimmt. Vorzugsweise wird der Sollwert S zusätzlich sowohl abhängig von der zweiten Ableitung d²D2/dt² des dynamischen Höhendifferenzwertes D2 im Zusammenhang mit fahrzeugspezifischen Größen als auch abhängig von weiteren dem Steuergerät übermittelten Informationen bestimmt. Derartige Größen bzw. Informationen sind z. B. die Straßeninformation a von einem Navigationssystem, der Abstand b zu einem vorausfahrenden Fahrzeug von einem Abstandsregelsystem, die Gaspedalstellung c, der Bremsdruck d, die Fahrzeuggeschwindigkeit e und/oder die Sichtweite f eines Nebelsensors. Mögliche Auswirkungen der weiteren Informationen a bis f auf die Ermittlung des Sollwertes S wurden bereits oben beschrieben.

Durch dieses erfindungsgemäße Ausführungsbeispiel ist sowohl eine schnelle, da auch vorausschauende, Regelung, als auch eine hochgenaue Regelung der Scheinwerfereinstellung in Abhängigkeit von tatsächlichen Nickwinkeländerungen möglich.

## Patentansprüche

1. System zur Leuchtweitenregelung der Scheinwerfer (5) bei Kraftfahrzeugen mit zwei in Längsrichtung versetzten Höhensensoren (Sv, Sh) zur Messung des Karosserie-Nickwinkels in Form einer Höhendifferenz (D) und mit einem elektronischen Steuergerät (4a; 4b) zur Bestimmung des Sollwertes (S) zur Scheinwerfereinstellung in Abhängigkeit von der gemessenen Höhendifferenz (D), **dadurch gekennzeichnet, daß** das Steuergerät (4a; 4b) derart ausgestaltet ist, daß der Sollwert (S) abhängig von der ersten Ableitung (d/dt) der direkt gemessenen (D) oder einer weiterverarbeiteten (D2) Höhendifferenz bestimmt wird.

2. System zur Leuchtweitenregelung nach Patentanspruch 1, **dadurch gekennzeichnet, daß** abhängig von dem Ergebnis der ersten Ableitung (dD/dt) der gemessenen Höhendifferenz (D) der Zeitraum für eine Mittelung der Höhendifferenz (D) vorgegeben wird.

3. System zur Leuchtweitenregelung nach Patentanspruch 1, **dadurch gekennzeichnet, daß** ein statischer Höhendifferenzwert (D1) zumindest durch Mittelung der direkt gemessenen Höhendifferenz über einen ersten vorgegebenen Zeitraum sowie ein dynamischer Höhendifferenzwert (D2) zumindest durch Mittelung der direkt gemessenen Höhendifferenz über einen zweiten vorgegebenen Zeitraum gebildet werden, wobei der erste Zeitraum wesentlich länger als der zweite Zeitraum vorgegeben wird, und daß der Sollwert (S) abhängig von der ersten Ableitung (dD2/dt) des dynamischen Höhendifferenzwertes (D2) als weiterverarbeitete Höhendifferenz bestimmt wird.

4. System zur Leuchtweitenregelung nach Patentanspruch 3, **dadurch gekennzeichnet, daß** der Sollwert abhängig von der zweiten Ableitung (d²D2/dt²) des dynamischen Höhendifferenzwertes (D2) bestimmt wird.

5. System zur Leuchtweitenregelung nach einem der Patentansprüche 2 bis 4, **dadurch gekennzeichnet, daß** der Sollwert (S) abhängig von weiteren dem Steuergerät übermittelten Informationen (a, b, c, d, e, f) bestimmt wird.

## Claims

1. A headlight levelling system for the headlights (5) in motor vehicles with two level sensors (Sv, Sh) offset in the longitudinal direction for measuring the vehicle body pitch angle in the form a level difference (D) and with an electronic control unit (4a; 4b) for determining the desired value (S) for adjusting the headlights as a function of the measured level difference (D), **characterised in that** the control unit (4a; 4b), is configured in such a way that the desired value (S) is determined as a function of the first derivative (d/dt) of the directly measured level difference (D) or a further processed level difference (D2).

2. A headlight levelling system according to claim 1, **characterised in that** the time period for averaging the level difference (D) is predetermined as a function of the result of the first derivative (dD/dt) of the measured level difference (D).

3. A headlight levelling system according to claim 1, **characterised in that** a static level difference (D1) is formed at least by averaging the directly measured level difference over a first predetermined time period and a dynamic level difference value (D2) is formed at least by averaging the directly measured level difference over a second predetermined time period, the first time period being predetermined as substantially longer than the second time period, and **in that** the desired value (S) is determined as a function of the first derivative (dD2/dt) of the dynamic level difference value (D2) as a further processed level difference.

4. A headlight levelling system according to claim 3, **characterised in that** the desired value is determined as a function of the second derivative (d²D2/dt²) of the dynamic level difference value (D2).

5. A headlight levelling system according to any one of claims 2 to 4, **characterised in that** the desired value (S) is determined as a function of further information (a, b, c, d, e, f) transmitted to the control unit.

## Revendications

1. Système de réglage de la portée des phares (5) d'un véhicule automobile, avec deux capteurs de hauteur (Sv, Sh) décalés en direction longitudinale pour la mesure de l'angle de tangage de la carrosserie sous la forme d'une différence de hauteur (D) et avec un appareil de commande électronique (4a; 4b) pour déterminer la valeur de consigne (S) en vue du réglage de la portée des phares en fonction de la différence de hauteur mesurée (D),
**caractérisé en ce que**
l'appareil de commande (4a; 4b) est conçu de façon à déterminer la valeur de consigne (S) en fonction de la dérivée première (d/dt) de la différence de hauteur mesurée directement (D) ou d'une différence de hauteur traitée (D2).

2. Système de réglage de la portée des phares selon la revendication 1,
**caractérisé en ce que**
l'on prédétermine la durée de calcul de la moyenne de la différence de hauteur (D) en fonction du résultat de la dérivée première (dD/dt) de la différence de hauteur mesurée (D).

3. Système de réglage de la portée des phares selon la revendication 1,
**caractérisé en ce que**
l'on forme une valeur statique de différence de hauteur (D1) au moins en calculant la moyenne de la différence de hauteur mesurée directement sur un premier intervalle de temps prédéterminé, ainsi qu'une valeur dynamique de différence de hauteur (D2) au moins en calculant la moyenne de la différence de hauteur mesurée directement sur un deuxième intervalle de temps prédéterminé, le premier intervalle de temps prédéterminé étant plus long que le deuxième intervalle de temps, et on détermine la valeur de consigne (S) en fonction de la dérivée première (dD2/dt) de la valeur dynamique de la différence de hauteur (D2) comme différence de hauteur traitée.

4. Système de réglage de la portée des phares selon la revendication 3,
**caractérisé en ce que**
l'on détermine la valeur de consigne en fonction de la dérivée seconde (d²D2/dt²) de la valeur dynamique de la différence de hauteur (D2).

5. Système de réglage de la portée des phares selon l'une quelconque des revendications 2 à 4,
**caractérisé en ce qu'**
on détermine la valeur de consigne (S) en fonction d'autres informations (a, b, c, d, e, f) transmises à l'appareil de commande.
